# EUROPÄISCHE PATENTANMELDUNG

(11) **EP 1 401 184 A1**
(43) Veröffentlichungstag der Anmeldung: **24.03.2004**
(21) Anmeldenummer: 02405808.3
(22) Anmeldetag: 17.09.2002
(51) Int. Cl.: H04M 15/00

(54) **Computer-basiertes System und Verfahren zum Verrechnen von Kommunikationskosten**

(71) Anmelder: Swisscom AG, 3000 Bern 29 (CH)
(72) Erfinder: Messmer, Bruno, Dr., 3600 Thun (CH); Riordan, John, 3006 Bern (CH); Bouwsma, Jasper M., 3098 Köniz (CH)
(74) Vertreter: BOVARD AG - Patentanwälte

(57) **Zusammenfassung**

Es werden ein Verfahren und ein computer-basiertes System (1) zum Verrechnen von Kommunikationskosten in einem Kommunikationsnetz (5) vorgeschlagen, welche ermöglichen, die Kommunikationskosten eines Teilnehmers des Kommunikationsnetzes (5) verschiedenen Kostenstellen des Teilnehmers zu verrechnen. Im computer-basierten System (1) werden Konfigurationsdaten, die Bedingungsangaben und Kostenstellenangaben umfassen, vom Teilnehmer entgegengenommen. Die entgegengenommenen Konfigurationsdaten werden als Regeln in einer Regeldatenbank (3) gespeichert, wobei jeweils Bedingungsangaben und zugeordnete Kostenstellenangaben dem Teilnehmer zugeordnet werden. Das computer-basierte System (1) bestimmt die Kostenstelle, auf welche die Kommunikationskosten des Teilnehmers verrechnet werden sollen, abhängig von den gespeicherten Bedingungsangaben und zugeordneten Kostenstellenangaben, die dem Teilnehmer zugeordnet sind. Es können Regeln mit zeit-, orts- und adressabhängigen Bedingungen definiert werden, so dass Kommunikationskosten, die für innerhalb eines bestimmten Zeit- oder Ortsbereichs benützte Kommunikationsdienste oder für Kommunikationsverbindungen mit Kommunikationspartner mit einer bestimmten Kommunikationsadresse anfallen, der Kostenstelle verrechnet werden, die diesem Zeit- oder Ortsbereich respektive dieser Kommunikationsadresse zugeordnet sind.

## Beschreibung

### Technisches Gebiet

Die vorliegende Erfindung betrifft ein computer-basiertes System und ein Verfahren zum Verrechnen von Kommunikationskosten. Die Erfindung betrifft insbesondere ein computer-basiertes System und ein Verfahren zum Verrechnen von Kommunikationskosten von Teilnehmern in einem Kommunikationsnetz.

### Stand der Technik

In Fällen, in denen ein Teilnehmer eines Kommunikationsnetzes ein Kommunikationsendgerät in unterschiedlichen Rollen verwendet, beispielsweise als Privatperson für private Gespräche oder als Angestellter für Geschäftsgespräche, ist es oft wünschenswert, die dabei entstehenden Kommunikationskosten verschiedenen Kostenstellen zu verrechnen, beispielsweise einem Privatkonto des Teilnehmers oder einem Geschäftskonto des Geschäftsinhabers, bei dem der Teilnehmer angestellt ist.

In herkömmlichen computer-basierten Hauszentralen, die von Firmen betrieben werden, besteht in der Regel die Möglichkeit bei der firmeninternen Verrechnung zwischen Privatgesprächen und Geschäftsgesprächen zu unterscheiden, wenn durch die Mitarbeiter vor der Eingabe der Rufnummer definierte Vorwahlnummern eingegeben werden.

In der Patentschrift US 5,943,406 werden ein Verfahren und ein computer-basiertes System beschrieben, in welchen ein Teilnehmer vor dem Erstellen einer Telefonverbindung einer Zentrale persönliche Identifizierungsinformationen und Verrechnungscodes angeben kann. Gemäss US 5,943,406 werden jeweils die Verbindungsdauer und der Verrechnungscode einander zugeordnet gespeichert und dem Teilnehmer später basierend auf den Verrechnungscode eine Rechnung mit detaillierter Abrechnung erstellt. Dadurch ist es für einen Teilnehmer in einem Kommunikationsnetz auch ohne Hauszentrale möglich die entstandenen Kommunikationskosten verschiedenen Kostenstellen zu zuordnen. Allerdings erhält der Teilnehmer nur eine Sammelrechnung und muss die tatsächliche Verrechnung der Kommunikationskosten auf verschiedene Kostenstellen, das heisst die Belastung verschiedener Konti, selber vornehmen.

In der Patentanmeldung EP 1 006 707 wird ein Verfahren und ein computer-basiertes System beschrieben, die einem Telefonbenutzer ermöglichen vor der Erstellung einer Verbindung eine Kontonummer anzugeben, beispielsweise unter gesprochener Menuführung, die das Konto bestimmt, auf welches die Kommunikationskosten der Telefonverbindung verrechnet werden sollen. Dadurch ist es gemäss EP 1 006 707 für einen Teilnehmer in einem Kommunikationsnetz möglich auch ohne Hauszentrale die Kommunikationskosten auf seinen Wunsch automatisch verschiedenen Kostenstellen verrechnen zu lassen. Allerdings wird die erneut notwendige Eingabe der Kontonummer von den Teilnehmern oft als mühsam und umständlich erachtet und kann zudem bei Fehleingaben oder Verwechslungen zu inkorrekten Verrechnungen führen.

### Darstellung der Erfindung

Es ist eine Aufgabe der vorliegenden Erfindung, ein neues computer-basiertes System und ein neues Verfahren zum Verrechnen von Kommunikationskosten von Teilnehmern in einem Kommunikationsnetz vorzuschlagen, welche nicht die Nachteile des Stands der Technik aufweisen und welche insbesondere ermöglichen die Kommunikationskosten eines Teilnehmers automatisch verschiedenen Kostenstellen des Teilnehmers zu verrechnen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass in einem computer-basierten System zum Verrechnen von Kommunikationskosten von Teilnehmern in einem Kommunikationsnetz Konfigurationsdaten von den Teilnehmern entgegengenommen werden, vorzugsweise über das Kommunikationsnetz, wobei die Konfigurationsdaten Bedingungsangaben und Kostenstellenangaben umfassen, dass die entgegengenommenen Konfigurationsdaten in einer Regeldatenbank des computer-basierten Systems gespeichert werden, wobei jeweils Bedingungsangaben und zugeordnete Kostenstellenangaben einem der Teilnehmer zugeordnet werden, und dass das computer-basierte System abhängig von den gespeicherten Bedingungsangaben und zugeordneten Kostenstellenangaben, die einem betreffenden der Teilnehmer zugeordnet sind, eine Kostenstelle bestimmt und die Kommunikationskosten des betreffenden Teilnehmers auf die bestimmte Kostenstelle verrechnet. Die vorliegende Erfindung ermöglicht einer Vielzahl von Teilnehmern eines Kommunikationsnetzes individuelle Regeln für die Verrechnung ihrer Kommunikationskosten in einem computer-basierten System zentralisiert zu definieren und zu speichern. Die Teilnehmer können diese Regeln definieren, indem sie Kostenstellen angeben und für die Kostenstellen jeweils Bedingungen spezifizieren, unter denen die Kommunikationskosten automatisch auf die betreffende Kostenstelle verrechnet werden sollen. Die Teilnehmer können sich so ihre Kommunikationskosten für unterschiedliche Rollen automatisch auf verschiedene Kostenstellen verrechnen lassen, ohne über eine persönliche oder firmeneigene Hauszentrale verfügen zu müssen und ohne bei jeder Kommunikationsverbindung erneut diesbezügliche Daten eingeben und an eine Verrechnungszentrale übermitteln zu müssen.

In einer bevorzugten Ausführungsvariante umfassen die Bedingungsangaben Zeitangaben und das computer-basierte System bestimmt die Kostenstelle abhängig von der Entstehungszeit der Kommunikationskosten eines betreffenden der Teilnehmer und von den gespeicherten Zeitangaben und zugeordneten Kostenstellenangaben, die dem betreffenden Teilnehmer zugeordnet sind. Durch die Übermittlung von Zeitangaben in den Bedingungsangaben können die Teilnehmer individuelle Zeitbereiche für ihre verschiedenen Kostenstellen spezifizieren. Kommunikationskosten, die für innerhalb eines bestimmten Zeitbereichs benützte Kommunikationsdienste anfallen, werden der Kostenstelle verrechnet, die diesem Zeitbereich zugeordnet ist. Es ist für die Teilnehmer also möglich Regeln für zeitabhängige Rollen zu definieren, beispielsweise können die Kosten für sämtliche Telefongespräche zwischen acht und zwölf Uhr morgens und zwischen zwei und sechs Uhr nachmittags automatisch auf die Kostenstelle des Arbeitgebers verrechnet werden, während die Kosten für alle anderen Telefongespräche auf die private Kostenstelle verrechnet werden.

In einer bevorzugten Ausführungsvariante ist das Kommunikationsnetz ein Mobilfunknetz, die Bedingungsangaben umfassen geografische Ortsangaben und das computer-basierte System bestimmt die Kostenstelle abhängig von den gespeicherten Ortsangaben und zugeordneten Kostenstellenangaben, die einem betreffenden der Teilnehmer zugeordnet sind, und abhängig vom geografischen Aufenthaltsort, an dem sich der betreffende Teilnehmer bei der Entstehung der Kommunikationskosten aufhielt. Durch die Übermittlung von Ortsangaben in den Bedingungsangaben können die Teilnehmer individuelle Ortsbereiche für ihre verschiedenen Kostenstellen spezifizieren. Kommunikationskosten, die für innerhalb eines bestimmten Ortsbereichs benützte Kommunikationsdienste anfallen, werden der Kostenstelle verrechnet, die diesem Ortsbereich zugeordnet ist. Es ist für die Teilnehmer mit mobilen Kommunikationsendgeräten also möglich Regeln für ortsabhängige Rollen zu definieren, beispielsweise können die Kosten für sämtliche Telefongespräche, die im Ortsbereich des Arbeitgebers geführt wurden, automatisch auf die Kostenstelle des Arbeitgebers verrechnet werden, während die Kosten für alle anderen Telefongespräche auf die private Kostenstelle verrechnet werden.

In einer bevorzugten Ausführungsvariante umfassen die Bedingungsangaben Kommunikationsadressen und das computer-basierte System bestimmt die Kostenstelle abhängig von den gespeicherten Kommunikationsadressen und zugeordneten Kostenstellenangaben, die einem betreffenden der Teilnehmer zugeordnet sind, und abhängig von der Kommunikationsadresse eines Kommunikationspartners einer Kommunikationsverbindung, die zu der Entstehung der Kommunikationskosten geführt hat. Durch die Übermittlung von Kommunikationsadressen in den Bedingungsangaben können die Teilnehmer ihren individuellen Partnerkommunikationsadressen verschiedene Kostenstellen zuordnen. Kommunikationskosten, die für eine Kommunikationsverbindung mit einem Kommunikationspartner mit einer gespeicherten Kommunikationsadresse anfallen, werden der Kostenstelle verrechnet, die dieser Kommunikationsadresse zugeordnet ist. Es ist für die Teilnehmer also möglich, Regeln für adressabhängige Rollen zu definieren, beispielsweise können die Kosten für sämtliche Telefongespräche an die Rufnummer der Ehefrau auf die private Kostenstelle verrechnet werden.

In einer Ausführungsvariante werden im computer-basierten System Kostenstellenidentifizierungen von Teilnehmern des Kommunikationsnetzes entgegengenommen und das computer-basierte System verrechnet die Kommunikationskosten eines betreffenden der Teilnehmer auf die Kostenstelle, die durch die vom betreffenden Teilnehmer entgegengenommene Kostenstellenidentifizierung bestimmt ist. Durch die Übermittlung von Kostenstellenidentifizierungen können die Teilnehmer Kommunikationskosten spontan auf ihre individuellen Kostenstellen verrechnen lassen, ohne dazu beispielsweise mehrstellige Kontonummern eingeben zu müssen.

In einer Ausführungsvariante erstellt das computer-basierte System anzeigbare Menulisten und übermittelt diese über das Kommunikationsnetz an Kommunikationsendgeräte der Teilnehmer. Die Menulisten umfassen jeweils die Kostenstellenidentifizierungen der Kostenstellen, die für den betreffenden Teilnehmer in der Regeldatenbank gespeichert wurden. Die Teilnehmer können somit einfach, durch Wahl eines Listeneintrags aus einer auf ihrem Kommunikationsendgerät angezeigten Menuliste, eine ihrer Kostenstellen für die Verrechnung ihrer Kommunikationskosten bestimmen.

Neben einem Verfahren und einem computer-basierten System zum Verrechnen von Kommunikationskosten von Teilnehmern in einem Kommunikationsnetz, betrifft die vorliegende Erfindung zudem ein Computerprogrammprodukt, das ein computerlesbares Medium mit darin enthaltenen Computerprogrammcodemitteln umfasst, zur Steuerung eines oder mehrerer Prozessoren eines computer-basierten Systems zum Verrechnen von Kommunikationskosten von Teilnehmern in einem Kommunikationsnetz.

### Kurze Beschreibung der Zeichnungen

Nachfolgend wird eine Ausführung der vorliegenden Erfindung anhand eines Beispieles beschrieben. Das Beispiel der Ausführung wird durch die folgende einzige beigelegte Figur illustriert:

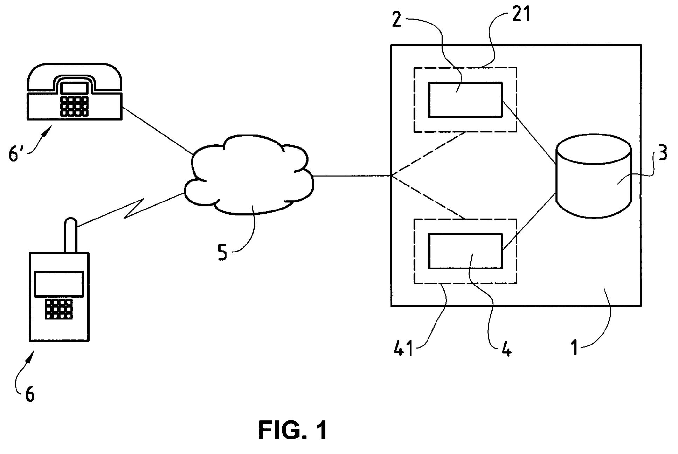

Figur 1 zeigt ein Blockdiagramm, welches schematisch ein computer-basiertes System zum Verrechnen von Kommunikationskosten in einem Kommunikationsnetz darstellt, das mit dem Kommunikationsnetz verbunden ist und über dieses Kommunikationsnetz mit Kommunikationsendgeräten kommunizieren kann.

### Wege zur Ausführung der Erfindung

In der Figur 1 bezieht sich das Bezugszeichen 5 auf ein Kommunikationsnetz, welches vorzugsweise ein Mobilfunknetz umfasst, beispielsweise ein GSM- (Global System for Mobile Communication) oder UMTS-Netz (Universal Mobile Telephone System) oder ein anderes, beispielsweise sallitenbasiertes Mobilfunknetz. Das Kommunikationsnetz 5 umfasst auch ein Festnetz, insbesondere das öffentliche geschaltete Telefonnetz, ein ISDN-Netz (Integrated Services Digital Nefwork) und das Internet.

Die Bezugszeichen 6 und 6' beziehen sich auf Kommunikationsendgeräte für die Kommunikation über das Kommunikationsnetz 5. Das Bezugszeichen 6 bezieht sich auf ein mobiles Kommunikationsendgerät, beispielsweise ein Mobilfunktelefon oder ein Laptop- oder PDA-Computer (Personal Digital Assistant) mit einem Mobilfunkkommunikationsmodul. Das Bezugszeichen 6' bezieht sich auf ein festes Kommunikationsendgerät, beispielsweise ein festes Telefon oder ein PC (Personal Computer) mit einem Modem oder mit einem ISDN-Kommunikationsmodul.

Das Bezugszeichen 1 bezieht sich auf ein computer-basiertes System zum Verrechnen von Kommunikationskosten von Teilnehmern im Kommunikationsnetz 5. Die Kommunikationskosten umfassen vorzugsweise Kosten für Kommunikationsverbindungen, insbesondere Telefongespräche, aber auch für andere kostenpflichtige Kommunikations- und Datendienste. Das computer-basierte System 1 umfasst funktionale Module, nämlich ein Konfigurationsmodul 2 und ein Verrechnungsmodul 4, die als programmierte Softwaremodule auf einem oder mehreren Computer ausgeführt werden. Der Fachmann wird verstehen, dass die funktionalen Module 2, 4 auch vollständig oder teilweise hardwaremässig ausgeführt werden können. Das computer-basierte System 1 umfasst zudem eine Regeldatenbank 3, die für den Datenaustausch mit dem Konfigurationsmodul 2 und dem Verrechnungsmodul 4 verbindbar ist. Die Regeldatenbank 3 ist gemeinsam mit dem Konfigurationsmodul 2 und/oder dem Verrechnungsmodul 4 auf einem gemeinsamen Computer oder auf einem separaten Computer ausgeführt. Das Konfigurationsmodul 2 und das Verrechnungsmodul 4 können gemeinsam in einer computer-basierten Zentrale oder separat in einer computer-basierten Konfigurationszentrale 21 respektive Verrechnungszentrale 41 ausgeführt werden. In den letzt genannten beiden Fällen wird die Regeldatenbank 3 in der Konfigurationszentrale 21 oder in der Verrechnungszentrale 41 oder dupliziert in der Konfigurationszentrale 21 und in der Verrechnungszentrale 41 ausgeführt.

**Tabelle 1**

| Teilnehmeridentifizierung | Bedingungsangaben | | Kostenstellenangaben | |
|---|---|---|---|---|
| | Bedingungstyp | Bedingungsparameter | Kostenstellenidentifizierung | Kostenstellendaten |

In der Regeldatenbank 3 sind Regeln für die Verrechnung von Kommunikationskosten eines Teilnehmers des Kommunikationsnetzes 5 auf bestimmte Kostenstellen gespeichert. In der Tabelle 1 sind die Datenelemente der in der Regeldatenbank 3 gespeicherten Regeln schematisch dargestellt. Die Regeln sind jeweils mittels einer Teilnehmeridentifizierung einem Teilnehmer des Kommunikationsnetzes 5 zugeordnet und umfassen Angaben über Kostenstellen und Angaben zu Bedingungen, die erfüllt sein müssen, damit die Kommunikationskosten des Teilnehmers einer bestimmten Kostenstelle verrechnet werden.

Die Teilnehmeridentifizierung zur Identifizierung eines mobilen Teilnehmers im Kommunikationsnetz 5 ist vorzugsweise eine so genannte IMSI (International Mobile Subscriber Identification). Es kann aber auch die MSISDN-Nummer (Mobile Subscriber ISDN) des Teilnehmers als Teilnehmeridentifizierung verwendet werden. Insbesondere für nicht-mobile Teilnehmer im Kommunikationsnetz 5 wird vorzugsweise die Rufnummer des Teilnehmers als Teilnehmeridentifizierung verwendet.

Die Bedingungsangaben umfassen einen Bedingungstyp und vom Bedingungstyp abhängige Bedingungsparameter. Es können beispielsweise Bedingungen mit einem zeitabhängigen, ortsabhängigen oder adressabhängigen Bedingungstyp definiert werden. Die Bedingungsparameter für ortsabhängige Bedingungen umfassen geografische Ortsangaben, beispielsweise geografische Bereichsangaben in Form einer Identifizierung einer Zelle oder Basisstation in einem Mobilfunknetz, in Form einer Gebietsidentifizierung oder in Form von Koordinaten. Die Bedingungsparameter für zeitabhängige Bedingungen umfassen Zeitangaben in Form einer Zeitbereichsangabe vorzugsweise mit einer Start- und einer Endtageszeit, es können jedoch auch Anfangs- und Endkalenderdaten verwendet werden. Die Bedingungsparameter für adressabhängige Bedingungen umfassen Kommunikationsadressen, beispielsweise Rufnummern oder URL-Adressen (Uniform Resource Locator). Es ist zudem möglich spezielle Bedingungstypen wie Sammelbedingungen oder Prioritätsbedingungen zu definieren, wobei eine Sammelbedingung sich auf alle Fälle bezieht, die nicht durch andere Bedingungen abgedeckt sind, und wobei eine Prioritätsbedingung sich auf solche Fälle bezieht, wo mehrere Bedingungen erfüllt sind, die sich jedoch auf unterschiedliche Kostenstellen beziehen. Die Regeln können auch jeweils eine von den Teilnehmern bestimmbare Prioritätsangabe umfassen, beispielsweise ein numerischer Wert, die die Kostenzuweisung in Fällen bestimmt, wo mehrere Bedingungen erfüllt sind, die sich auf unterschiedliche Kostenstellen beziehen.

Die Kostenstellenangaben umfassen eine Kostenstellenidentifizierung und Kostenstellendaten mit Angaben über Bankverbindungen, beispielsweise eine Kontonummer oder eine Kreditkartennummer, oder eine Rechnungsadresse. Die Koststellenidentifizierung umfasst eine Nummer, einen Namen oder einen anderen alphanumerischen Code, welche eine von mehreren Kostenstellen eines bestimmten Teilnehmers eindeutig identifizieren.

Die in der Regeldatenbank 3 gespeicherten Regeln können von den Teilnehmern selbst bestimmt werden. Die dafür erforderlichen Konfigurationsdaten, die Bedingungsangaben, Kostenstellenangaben und gegebenenfalls Prioritätsangaben umfassen, können von den Teilnehmern über das Kommunikationsnetz 5 an das computer-basierte System 1 übermittelt werden. Die Übermittlung der Konfigurationsdaten erfolgt beispielsweise durch ein mobiles Kommunikationsendgerät 6 mittels SMS- (Short Message Service), MMS- (Multimedia Message Service) oder USSD-Meldungen (Unstructured Supplementary Services Data), oder mittels speziellen Datendiensten, beispielsweise GPRS (Generalized Packet Radio Service) oder HSCSD (High Speed Circuit Switched Data). Die Übermittlung der Konfigurationsdaten an das computer-basierte System 1 kann auch mittels Web-Diensten über das Internet erfolgen. In Abhängigkeit davon wie die Konfigurationsdaten an das computer-basierte System 1 übermittelt werden, wird der verantwortliche Teilnehmer auf Grund einer Teilnehmeridentifizierung bestimmt, die aus der Infrastruktur des Kommunikationsnetzes 5 erhalten wird, oder er wird basierend auf Kenndaten bestimmt, so genannte Login Informationen, die vom Teilnehmer angegeben werden.

Im computer-basierten System 1 werden die Konfigurationsdaten vom Konfigurationsmodul 2 entgegengenommen und in der Regeldatenbank 3 gespeichert. Die Kostenstellenidentifizierungen werden vorzugsweise vom Konfigurationsmodul 2 vergeben, indem die durch Kostendaten definierten Kostenstellen eines Teilnehmers fortlaufend nummeriert werden (1, 2, 3, ...). Der Teilnehmer hat jedoch die Möglichkeit diese vom Konfigurationsmodul 2 vergebenen Kostenstellenidentifizierungen zu überschreiben respektive seine eigenen Kostenstellenidentifizierungen zuzuordnen, beispielsweise in Form von Kennworten. Die Regeln können von den Teilnehmern so definiert werden, dass Bedingungsangaben mit zugeordneten Kostenstellidentifizierungen von vorgängig definierten Kostenstellen an das computer-basierte System 1 übermittelt werden. Regeln können jedoch von den Teilnehmern auch so definiert werden, dass Bedingungsangaben mit zugeordneten Kostenstellendaten an das computer-basierte System 1 übermittelt werden.

Das Verrechnungsmodul 4 verrechnet die Kommunikationskosten eines Teilnehmers des Kommunikationsnetzes 5 auf eine dem Teilnehmer zugeordnete Kostenstelle. Die Kommunikationskosten werden auf der Basis von Verrechnungsbelegen bestimmt, die aus der Infrastruktur des Kommunikationsnetzes 5 erhalten werden, beispielsweise basierend auf so genannten CDR-Belegen (Call Detail Records). Das Verrechnungsmodul 4 bestimmt die Kostenstelle aus der Regeldatenbank 3 in Abhängigkeit von den gespeicherten Bedingungsangaben und zugeordneten Kostenstellenangaben, die dem betreffenden Teilnehmer zugeordnet sind.

Falls dem Teilnehmer Regeln mit zeitabhängigen Bedingungen zugeordnet sind, wird die in den Verrechnungsbelegen festgehaltene Entstehungszeit der Kommunikationskosten mit den in den zeitabhängigen Bedingungen enthaltenen Zeitangaben verglichen. Falls die Entstehungszeit in den Zeitbereich einer Bedingung fällt, werden die Kommunikationskosten der Kostenstelle verrechnet, die dieser Bedingung zugeordnet ist.

Falls dem Teilnehmer Regeln mit ortsabhängigen Bedingungen zugeordnet sind, wird der Ort, wo der Kommunikationsdienst initiiert wurde, respektive der Ortsbereich, wo der Kommunikationsdienst durchgeführt wurde, aus den Verrechnungsbelegen bestimmt und mit den in den ortsabhängigen Bedingungen enthaltenen Ortsangaben verglichen. Falls der Ort respektive der Ortsbereich, wo die Kommunikationskosten entstanden sind, in den Ortsbereich einer Bedingung fällt, werden die Kommunikationskosten der Kostenstelle verrechnet, die dieser Bedingung zugeordnet ist.

Falls dem Teilnehmer Regeln mit adressabhängigen Bedingungen zugeordnet sind, wird die in den Verrechnungsbelegen festgehaltene Kommunikationsadresse des Kommunikationspartners mit den in den adressabhängigen Bedingungen enthaltenen Kommunikationsadressen verglichen. Falls die Kommunikationsadresse des Kommunikationspartners mit der Kommunikationsadresse einer Bedingung übereinstimmt, werden die Kommunikationskosten der Kostenstelle verrechnet, die dieser Bedingung zugeordnet ist. Regeln mit adressabhängigen Bedingungen können gegenüber Regeln mit orts- oder zeitabhängigen Bedingungen mit vorrangiger Priorität versehen werden.

Falls weder die Entstehungszeit, noch der Ort respektive der Ortsbereich, wo die Kommunikationskosten entstanden sind, noch die Kommunikationsadresse des Kommunikationspartners eine der Bedingungen des Teilnehmers erfüllen, werden die Kommunikationskosten der Kostenstelle verrechnet, die der Sammelbedingung zugeordnet ist.

Falls gleichzeitig eine ortsabhängige und eine zeitabhängige Bedingung des Teilnehmers erfüllt wird, denen aber verschiedene Kostenstellen zugeordnet sind, können die Kommunikationskosten der Kostenstelle verrechnet, die der Regel mit der höheren Prioritätsangabe zugeordnet ist oder die andernfalls der Prioritätsbedingung zugeordnet ist.

Teilnehmer können jedoch die Kostenstelle, der die Kommunikationskosten eines nachfolgend benutzten Kommunikationsdienstes verrechnet werden sollen, auch spontan definieren und dabei die in der Regeldatenbank gespeicherten, an Bedingungen gebundenen Regeln umgehen. Zu diesem Zweck übermittelt das Konfigurationsmodul 2 die Kostenstellenidentifizierungen der Kostenstellen eines Teilnehmers über das Kommunikationsnetz 5 an das Kommunikationsendgerät 6, 6' des betreffenden Teilnehmers. Das Konfigurationsmodul 2 erstellt zum Beispiel Menulisten mit Kostenstellenidentifizierungen der Kostenstellen des Teilnehmers und übermittelt diese Menulisten über das Kommunikationsnetz 5 an das Kommunikationsendgerät 6, 6' des betreffenden Teilnehmers. Derartige Menulisten können auch durch geeignete Softwareapplikationen im Kommunikationsendgerät 6, 6' basierend auf den empfangenen Kostenstellenidentifizierungen erstellt werden. Die Menulisten sind auf den Kommunikationsendgeräten 6, 6' anzeigbar und ermöglichen den Teilnehmern durch einfache Menuauswahl eine ihrer Kostenstellen für den nachfolgend benutzen Kommunikationsdienst auszuwählen. Es besteht auch die Möglichkeit die ausgewählte Kostenstelle mittels eines zusätzlichen Gültigkeitsparameters bis auf Widerruf als Kostenstelle für sämtliche nachfolgenden Kommunikationsdienste zu definieren. Die ausgewählte Kostenstellenidentifizierung und gegebenenfalls der Gültigkeitsparameter werden wie die Konfigurationsdaten über das Kommunikationsnetz 5 an das computer-basierte System 1 übermittelt, wo sie durch das Konfigurationsmodul 2 entgegengenommen und zusammen mit der aktuellen Zeit- und Datumsangabe gespeichert werden. Solche überschreibenden Kostenstellenidentifizierungen können beispielsweise in der Regeldatenbank 3 als Regel gespeichert werden, wobei der Bedingungstyp eine Prioritätsbedingung definiert und die Bedingungsparameter den Zeitbereich definieren, während dem die Überschreibung aktiv sein soll. Falls das Verrechnungsmodul 4 feststellt, dass eine überschreibende Kostenstellidentifizierung gespeichert wurde, werden die Kommunikationskosten, die unmittelbar nach dem Setzen der überschreibende Kostenstellidentifizierung entstehen, oder die bis auf Widerruf der überschreibende Kostenstellidentifizierung entstehen, oder die innerhalb des Zeitbereichs der überschreibenden Kostenstellidentifizierung entstehen, der Kostenstelle verrechnet, die durch die überschreibende Kostenstellenidentifizierung bestimmt wird.

## Patentansprüche

1. Computer-basiertes System (1 ) zum Verrechnen von Kommunikationskosten von Teilnehmern in einem Kommunikationsnetz (5), **gekennzeichnet durch**:
- ein Konfigurationsmodul (2) zum Entgegennehmen von Konfigurationsdaten von den Teilnehmern des Kommunikationsnetzes (5), wobei die Konfigurationsdaten Bedingungsangaben und Kostenstellenangaben umfassen,
- eine Regeldatenbank (3) zum Speichern der entgegengenommenen Konfigurationsdaten, in welcher jeweils Bedingungsangaben und zugeordnete Kostenstellenangaben einem der Teilnehmer zugeordnet sind, und
- ein Verrechnungsmodul (4) zum Verrechnen der Kommunikationskosten eines Teilnehmers auf eine bestimmte Kostenstelle, und zum Bestimmen dieser Kostenstelle abhängig von den gespeicherten Bedingungsangaben und zugeordneten Kostenstellenangaben, die dem betreffenden Teilnehmer zugeordnet sind.

2. System (1) nach Anspruch 1, **dadurch gekennzeichnet, dass** die Bedingungsangaben Zeitangaben umfassen und dass das Verrechnungsmodul (4) eingerichtet ist zum Bestimmen der Kostenstelle abhängig von der Entstehungszeit der Kommunikationskosten und von den gespeicherten Zeitangaben und zugeordneten Kostenstellenangaben, die dem betreffenden Teilnehmer zugeordnet sind.

3. System (1) nach einem der Ansprüche 1 oder 2, **dadurch gekennzeichnet, dass** das Kommunikationsnetz (5) ein Mobilfunknetz ist, dass die Bedingungsangaben geografische Ortsangaben umfassen und dass das Verrechnungsmodul (4) eingerichtet ist zum Bestimmen der Kostenstelle abhängig von den gespeicherten Ortsangaben und zugeordneten Kostenstellenangaben, die dem betreffenden Teilnehmer zugeordnet sind und abhängig vom geografischen Aufenthaltsort, an dem sich der betreffende Teilnehmer bei der Entstehung der Kommunikationskosten aufhielt.

4. System (1) nach einem der Ansprüche 1 bis 3, **dadurch gekennzeichnet, dass** die Bedingungsangaben Kommunikationsadressen umfassen und dass das Verrechnungsmodul (4) eingerichtet ist zum Bestimmen der Kostenstelle abhängig von der Kommunikationsadresse eines Kommunikationspartners einer Kommunikationsverbindung, die zu der Entstehung der Kommunikationskosten geführt hat, und von den gespeicherten Kommunikationsadressen und zugeordneten Kostenstellenangaben, die dem betreffenden Teilnehmer zugeordnet sind.

5. System (1) nach einem der Ansprüche 1 bis 4, **dadurch gekennzeichnet, dass** das Konfigurationsmodul (2) eingerichtet ist zum Entgegennehmen von Kostenstellenidentifizierungen von Teilnehmern des Kommunikationsnetzes (5) und dass das Verrechnungsmodul (4) eingerichtet ist zum Verrechnen der Kommunikationskosten eines betreffenden der Teilnehmer auf die Kostenstelle, die durch eine vom betreffenden Teilnehmer entgegengenommene Kostenstellenidentifizierung bestimmt ist.

6. System (1) nach Anspruch 5, **dadurch gekennzeichnet, dass** das Konfigurationsmodul (2) eingerichtet ist zum Entgegennehmen von Daten von Teilnehmern über das Kommunikationsnetz (5), dass das Konfigurationsmodul (2) eingerichtet ist zum Erstellen und Übermitteln von anzeigbaren Menulisten über das Kommunikationsnetz (5) an Kommunikationsendgeräte (6, 6') der Teilnehmer, wobei die Menulisten jeweils die Kostenstellenidentifizierungen der Kostenstellen umfassen, die für den betreffenden Teilnehmer in der Regeldatenbank (3) gespeichert sind.

7. Verfahren zum Verrechnen von Kommunikationskosten von Teilnehmern in einem Kommunikationsnetz (5), **dadurch gekennzeichnet,**
**dass** in einem computer-basierten System (1) Konfigurationsdaten von den Teilnehmern des Kommunikationsnetzes (5) entgegengenommen werden, wobei die Konfigurationsdaten Bedingungsangaben und Kostenstellenangaben umfassen,
**dass** die entgegengenommenen Konfigurationsdaten in einer Regeldatenbank (3) des computer-basierten Systems (1) gespeichert werden, wobei jeweils Bedingungsangaben und zugeordnete Kostenstellenangaben einem der Teilnehmer zugeordnet werden, und
**dass** das computer-basierte System (1), abhängig von den gespeicherten Bedingungsangaben und zugeordneten Kostenstellenangaben, die einem betreffenden der Teilnehmer zugeordnet sind, eine Kostenstelle bestimmt und die Kommunikationskosten des betreffenden Teilnehmers auf die bestimmte Kostenstelle verrechnet.

8. Verfahren nach Anspruch 7, **dadurch gekennzeichnet, dass** in den Bedingungsangaben Zeitangaben entgegengenommen werden und dass das computer-basierte System (1) die Kostenstelle abhängig von der Entstehungszeit der Kommunikationskosten eines betreffenden der Teilnehmer und von den gespeicherten Zeitangaben und zugeordneten Kostenstellenangaben, die dem betreffenden Teilnehmer zugeordnet sind, bestimmt.

9. Verfahren nach einem der Ansprüche 7 oder 8, **dadurch gekennzeichnet, dass** ein Mobilfunknetz als Kommunikationsnetz (5) verwendet wird, dass geografische Ortsangaben in den Bedingungsangaben entgegengenommen werden, und dass das computer-basierte System (1) die Kostenstelle abhängig von den gespeicherten Ortsangaben und zugeordneten Kostenstellenangaben, die einem betreffenden der Teilnehmer zugeordnet sind, und abhängig vom geografischen Aufenthaltsort, an dem sich der betreffende Teilnehmer bei der Entstehung der Kommunikationskosten aufhielt, bestimmt.

10. Verfahren nach einem der Ansprüche 7 bis 9, **dadurch gekennzeichnet, dass** Kommunikationsadressen in den Bedingungsangaben entgegengenommen werden, und dass das computer-basierte System (1) die Kostenstelle abhängig von den gespeicherten Kommunikationsadressen und zugeordneten Kostenstellenangaben, die einem betreffenden der Teilnehmer zugeordnet sind, und abhängig von der Kommunikationsadresse eines Kommunikationspartners einer Kommunikationsverbindung, die zu der Entstehung der Kommunikationskosten geführt hat, bestimmt.

11. Verfahren nach einem der Ansprüche 7 bis 10, **dadurch gekennzeichnet, dass** im computer-basierten System (1) Kostenstellenidentifizierungen von Teilnehmern des Kommunikationsnetzes (5) entgegengenommen werden, und dass das computer-basierte System (1 ) die Kommunikationskosten eines betreffenden der Teilnehmer auf die Kostenstelle verrechnet, die durch die vom betreffenden Teilnehmer entgegengenommene Kostenstellenidentifizierung bestimmt ist.

12. Verfahren nach Anspruch 11, **dadurch gekennzeichnet, dass** im computer-basierten System (1) Daten über das Kommunikationsnetz (5) von Teilnehmern entgegengenommen werden, dass das computer-basierte System (1) anzeigbare Menulisten erstellt und über das Kommunikationsnetz (5) an Kommunikationsendgeräte (6, 6') der Teilnehmer übermittelt, wobei die Menulisten jeweils die Kostenstellenidentifizierungen der Kostenstellen umfassen, die für den betreffenden Teilnehmer in der Regeldatenbank (3) gespeichert wurden.

13. Computerprogrammprodukt umfassend: ein computerlesbares Medium mit darin enthaltenen Computerprogrammcodemitteln zur Steuerung eines oder mehrerer Prozessoren eines computer-basierten Systems (1) zum Verrechnen von Kommunikationskosten von Teilnehmern in einem Kommunikationsnetz (5), derart,
dass im computer-basierten System (1) Konfigurationsdaten von den Teilnehmern des Kommunikationsnetzes (5) entgegengenommen werden, wobei die Konfigurationsdaten Bedingungsangaben und Kostenstellenangaben umfassen,
dass die entgegengenommenen Konfigurationsdaten in einer Regeldatenbank (3) des computer-basierten Systems (1) gespeichert werden, wobei jeweils Bedingungsangaben und zugeordnete Kostenstellenangaben einem der Teilnehmer zugeordnet werden, und
dass im computer-basierten System (1), abhängig von den gespeicherten Bedingungsangaben und zugeordneten Kostenstellenangaben, die einem betreffenden der Teilnehmer zugeordnet sind, eine Kostenstelle bestimmt wird und die Kommunikationskosten des betreffenden Teilnehmers auf die bestimmte Kostenstelle verrechnet werden.

14. Das Computerprogrammprodukt gemäss Anspruch 13, **dadurch gekennzeichnet, dass** es weitere Computerprogrammcodemittel umfasst, die die Prozessoren des computer-basierten Systems (1) derart steuern, dass in den Bedingungsangaben enthaltene Zeitangaben im computer-basierten System (1) entgegengenommen werden und dass im computer-basierten System (1) die Kostenstelle abhängig von der Entstehungszeit der Kommunikationskosten eines betreffenden der Teilnehmer und von den gespeicherten Zeitangaben und zugeordneten Kostenstellenangaben, die dem betreffenden Teilnehmer zugeordnet sind, bestimmt werden.

15. Das Computerprogrammprodukt gemäss einem der Ansprüche 13 oder 14, **dadurch gekennzeichnet, dass** es weitere Computerprogrammcodemittel umfasst, die die Prozessoren des computer-basierten Systems (1) derart steuern, dass in den Bedingungsangaben enthaltene geografische Ortsangaben im computer-basierten System (1) entgegengenommen werden und dass im computer-basierten System (1) die Kostenstelle abhängig von den gespeicherten Ortsangaben und zugeordneten Kostenstellenangaben, die einem betreffenden der Teilnehmer zugeordnet sind, und abhängig vom geografischen Aufenthaltsort, an dem sich der betreffende Teilnehmer bei der Entstehung der Kommunikationskosten aufhielt, bestimmt werden.

16. Das Computerprogrammprodukt gemäss einem der Ansprüche 13 bis 15, **dadurch gekennzeichnet, dass** es weitere Computerprogrammcodemittel umfasst, die die Prozessoren des computer-basierten Systems (1) derart steuern, dass in den Bedingungsangaben enthaltene Kommunikationsadressen im computer-basierten System (1) entgegengenommen werden, und dass im computer-basierten System (1) die Kostenstelle abhängig von den gespeicherten Kommunikationsadressen und zugeordneten Kostenstellenangaben, die einem betreffenden der Teilnehmer zugeordnet sind, und abhängig von der Kommunikationsadresse eines Kommunikationspartners einer Kommunikationsverbindung, die zu der Entstehung der Kommunikationskosten geführt hat, bestimmt werden.

17. Das Computerprogrammprodukt gemäss einem der Ansprüche 13 bis 16, **dadurch gekennzeichnet, dass** es weitere Computerprogrammcodemittel umfasst, die die Prozessoren des computer-basierten Systems (1) derart steuern, dass im computer-basierten System (1) Kostenstellenidentifizierungen von Teilnehmern des Kommunikationsnetzes (5) entgegengenommen werden, und dass im computer-basierten System (1) die Kommunikationskosten eines betreffenden der Teilnehmer auf die Kostenstelle verrechnet werden, die durch die vom betreffenden Teilnehmer entgegengenommene Kostenstellenidentifizierung bestimmt ist.

18. Das Computerprogrammprodukt gemäss Anspruch 17, **dadurch gekennzeichnet, dass** es weitere Computerprögrammcodemittel umfasst, die die Prozessoren des computer-basierten Systems (1) derart steuern, dass im computer-basierten System (1) Daten über das Kommunikationsnetz (5) von Teilnehmern entgegengenommen werden, dass im computer-basierten System (1) anzeigbare Menulisten erstellt werden, und dass die erstellten anzeigbaren Menulisten vom computer-basierten System (1) über das Kommunikationsnetz (5) an Kommunikationsendgeräte (6, 6') der Teilnehmer übermittelt werden, wobei die Menulisten jeweils die Kostenstellenidentifizierungen der Kostenstellen umfassen, die für den betreffenden Teilnehmer in der Regeldatenbank (3) gespeichert wurden.
